Europäisches Patentamt

European Patent Office

Office européen des brevets

(19)

(11) Numéro de publication : **0 177 429**
**B1**

(12) **FASCICULE DE BREVET EUROPÉEN**

(45) Date de publication du fascicule du brevet :
09.08.89

(21) Numéro de dépôt : 85401943.7

(22) Date de dépôt : 04.10.85

(51) Int. Cl.⁴ : **H 04 L 11/16, G 06 F 13/42**

(54) **Procédé d'échange d'informations entre abonnés par bus en anneau et dispositif multiprocesseur en comportant application.**

(30) Priorité : 05.10.84 FR 8415321

(43) Date de publication de la demande :
09.04.86 Bulletin 86/15

(45) Mention de la délivrance du brevet :
09.08.89 Bulletin 89/32

(84) Etats contractants désignés :
DE GB IT

(56) Documents cités :
THE 10th ANNUAL INTERNATIONAL SYMPOSIUM
ON COMPUTER ARCHITECTURE, 13-16 juin 1983,
pages 379-386, Stockholm, SE, IEEE, New York, US;
G. GAILLAT: "The design of a parallel processor for
image processing onboard satellites: an application
oriented approach"
PATENTS ABSTRACTS OF JAPAN, vol. 5, no. 163 (E-
78) [835], 20 Octobre 1981, page 87 E 78; & JP - A - 56
91 554 (TOKYO SHIBAURA DENKI K.K.) 24-07-1981
THE 6th INTERNATIONAL CONFERENCE ON PAT-
TERN RECOGNITION, 19-22 octobre 1982, pages 250-
253, IEEE, New York, US; G.C. NICOLAE et al.: "The
ultrafast asynchronous bus - a basic component for
efficient image processing"
FTCS 12th ANNUAL INTERNATIONAL SYMPOSIUM
FAULT-TOLERANT COMPUTING, 22-24 juin 1982,
pages 187-194, IEEE, New York, US; H. HIROKAZU et
al.: "Highly reliable loop computer network system
based on autonomous decentralization concept"

(73) Titulaire : MATRA
4 rue de Presbourg
F-75116 Paris (FR)

(72) Inventeur : Gaillat, Gérard
3, rue de la Mare Adam
F-92370 Chaville (FR)
Inventeur : Nguyen Tan Hon, Julien
16, rue de la Roseraie
F-92360 Meudon la Foret (FR)

(74) Mandataire : Fort, Jacques et al
CABINET PLASSERAUD 84, rue d'Amsterdam
F-75009 Paris (FR)

## Description

L'invention concerne les dispositifs comportant plusieurs abonnés, dont certains au moins sont de type actif ou maître, reliés en parallèle à un bus en anneau d'échange d'informations entre eux. Elle est notamment utilisable dans un dispositif multiprocesseur comportant des abonnés passifs ou esclaves dont chacun est relié au bus par un interface passif permettant à l'abonné de recevoir un ordre de transfert, des abonnés actifs dont chacun est relié au bus par un interface actif (en plus ou à la place d'un interface passif) permettant de provoquer un transfert d'informations entre cet abonné actif et un autre abonné, et une horloge permettant de faire circuler sur le bus des cases d'informations d'un abonné au suivant à chaque coup d'horloge. Le terme « case », correspondant au mot anglo-saxon « slot », est utilisé ici pour désigner l'unité élémentaire d'information circulant sur le bus, comprenant au moins une indication d'état à laquelle s'ajoute une adresse de destination et/ou un mot de données.

Un dispositif multiprocesseur de ce type, décrit dans « Le calculateur parallèle Capitan : 600 MIPS pour l'imagerie temps réel » (Gérard Gaillat, Premier Colloque Image, Biarritz, mai 1984) et dans « The design of a parallel processor for image processing onboard satellites : an application oriented approach » (Gérard Gaillat, Tenth Annual Symposium on Computer Architecture, Stockholm, June 13-16, 1983), auxquels on pourra se reporter, utilise un protocole de transfert décentralisé et passif, en ce sens que chaque abonné muni d'un interface de bus passif ou PBI ne peut recevoir de sollicitations en provenance d'un abonné muni d'un interface de bus actif ou API que dans des cases qui lui sont affectées et qui sont espacées suffisamment pour respecter le temps de cycle de mémoire de l'abonné passif. Si par exemple l'horloge de base du bus a une durée de cycle de 50 ns et si une mémoire a un temps de cycle de 400 ns, il est nécessaire qu'une case sur huit au plus permette d'accéder à l'abonné passif. Plusieurs abonnés passifs peuvent partager — et en général partageront — la même case.

Ce protocole présente de nombreux avantages. Il peut être mis en œuvre de manière décentralisée par chaque abonné et représente une complexité électronique acceptable ; les conflits d'accès sont résolus au niveau de l'abonné actif, ce qui évite de gaspiller des cases lorsque la mémoire d'un abonné passif est occupée. Une case ne peut circuler à vide que si aucun abonné ne désire accéder aux mémoires des abonnés auxquels cette case est affectée. Les abonnés actifs n'ont pas à se soucier de rechercher la présence d'un signal « mémoire occupée » : dès qu'un abonné actif a obtenu une case, il peut être sûr que le transfert s'accomplira. D'autres lectures peuvent donc être lancées avant que le résultat d'une première lecture n'ait été reçu. Il est en particulier important de relever que, comme le bus à passage de jetons (US-A-4 293 948), mais avec des débits supérieurs, le protocole décentralisé et passif sur bus en anneau permet d'éviter les collisions sur le bus.

Un premier résultat que cherche à atteindre l'invention consiste à améliorer le taux d'utilisation du bus et notamment à écarter les limitations liées au temps de réponse des PBI.

Dans ce but, l'invention propose notamment un procédé d'échange d'informations par cases circulant sur le bus en anneau, chaque case contenant une indication d'état ainsi qu'une adresse et/ou un mot de données, suivant un protocole de transfert décentralisé et passif à affectation statique de cases aux abonnés qui sont munis d'un PBI conforme à la partie caractérisante de la revendication 1.

On connaît (JP-A-5 691 554) un procédé d'échange d'informations utilisant un système en anneau, où les échanges d'informations se font par « cases », chaque case comportant seulement deux parties, ayant des durées différentes, affectées respectivement à une autorisation d'émission et à des données. Il s'agit là d'une disposition ne permettant pas de remplir toutes les fonctions du procédé ci-dessus défini.

Lorsque le cycle de base d'horloge a une durée a (par exemple 50 ns), les parties peuvent avoir une durée commune égale à 4a. A chaque partie sont affectés des fils différentes du bus, par exemple deux fils pour l'état, six pour l'adresse, quatre pour le mot de données. L'intervalle de temps entre le début de l'adresse et le début du mot de données d'une même case circulante est par exemple 16a. Cela permet l'utilisation de mémoires dont le temps d'accès est au plus égal à 12a et le temps de cycle au plus égal à 16a. Il est avantageusement prévu d'émettre l'adresse, non pas en même temps que l'indication d'état mais immédiatement après (c'est-à-dire que les débuts des parties adresse et indication d'état sont séparés de 4a). Mais, du fait de l'imbrication temporelle des cases, l'encombrement temporel d'une case n'est en fait que 4a.

Le procédé d'échange suivant l'invention permet de donner aux abonnés une constitution matérielle ou « hardware » indépendante de la longueur du bus, en prévoyant dans chaque ABI un registre à décalage où la circulation s'effectue en même temps que sur le bus.

L'invention vise également à réduire les conséquences, sur le dispositif, d'une défaillance d'un des abonnés reliés au bus en anneau ou de son interface, et cela sans augmenter de façon excessive la complexité du dispositif, et de donner au dispositif une flexibilité autorisant des reconfigurations à la demande.

Dans ce but, l'invention propose un dispositif comportant au moins un bus en anneau à deux boucles prévu pour des circulations de sens opposés, chaque interface d'abonné étant relié aux deux boucles, caractérisé notamment en ce que les interfaces sont regroupés par couples et les deux interfaces de chaque couple étant reliés aux boucles par un nombre de liaisons juste suffisant pour permettre de refermer les deux boucles l'une sur l'autre pour reconstituer un bus en excluant le couple où se trouve un interface ou abonné défaillant.

Dans la pratique, ce résultat peut être obtenu en prévoyant, sur chaque interface, deux pattes d'entrée et une seule patte de sortie au lieu de deux pattes de sortie et deux pattes d'entrée dans une architecture classique reconfigurable à deux bus. Il est possible de généraliser cette conception en regroupant les interfaces non plus deux par deux, mais quatre par quatre ou même huit par huit afin d'obtenir des réseaux bi- ou tridimensionnels permettant de pallier la défaillance simultanée de plusieurs interfaces. Le résultat est obtenu au prix de la mise hors service d'un nombre accru d'abonnés en cas de défaillance d'un interface.

Il faut incidemment noter que la mise hors service de deux interfaces en cas de défaillance d'un seul ne représente souvent pas un inconvénient. En effet, on peut constituer les couples par l'interface actif et l'interface passif affectés à un seul et même abonné processeur.

L'invention sera mieux comprise à la lecture de la description qui suit d'un mode particulier d'exécution, donné à titre d'exemple non limitatif. La description se réfère aux dessins qui l'accompagnent, dans lesquels :

— La Figure 1 est un schéma donnant l'architecture générale d'un dispositif multiprocesseur parallèle à double bus en anneau auquel est applicable l'invention,

— la Figure 2 est un schéma de principe de l'interface d'un abonné actif du bus de la Figure 1,

— la Figure 3 montre la répartition des parties d'une case circulant sur les bus,

— la Figure 4 montre l'imbrication temporelle des parties de cases successives,

— la Figure 5 est un schéma montrant l'ordonnancement des bits d'une case,

— la Figure 6 est un chronogramme montrant le déroulement d'une opération d'écriture,

— les Figures 7, 8 et 9 sont des schémas montrant respectivement l'apparition d'un cycle libre en cas de transition lecture-écriture, la nécessité d'un report d'écriture en cas de transition écriture-lecture et le rattrapage du retard d'écriture,

— la Figure 10 est un synoptique montrant une constitution possible d'un interface de bus actif,

— la Figure 11 donne, à titre d'indication, une constitution connue de dispositif à bus en anneau reconfigurable,

— les Figures 12A et 12B montrent une architecture suivant l'invention autorisant une reconfiguration au prix d'un nombre de fils de liaison moindre que dans les dispositifs suivant l'art antérieur, les interfaces étant associés par deux,

— la Figure 13 montre une architecture autorisant la défaillance de deux abonnés quelconques, les interfaces étant assemblés par quatre,

— la Figure 14 est un schéma de principe montrant un interface à deux entrées et deux sorties et une entrée de secours utilisable dans un but de fiabilisation,

— la Figure 15 est un schéma montrant une fraction de l'architecture de la Figure 12A, modifiée par utilisation d'interfaces du type montré en Figure 14.

L'invention sera décrite dans son application à un dispositif multiprocesseur du genre déjà évoqué dans les documents cités aus début de la présente demande, dispositif utilisable comme processeur en réseau couplable à un calculateur universel hôte ou comme processeur intégré. Il sera surtout envisagé ici dans son application en tant que calculateur parallèle en architecture MIMD (multi-instructions, multi-données) traitant des signaux circulant sur deux bus 10 et 12 bidirectionnels. Cependant, pour simplifier la description du protocole, seules seront tout d'abord considérées les liaisons des abonnés avec un seul bus.

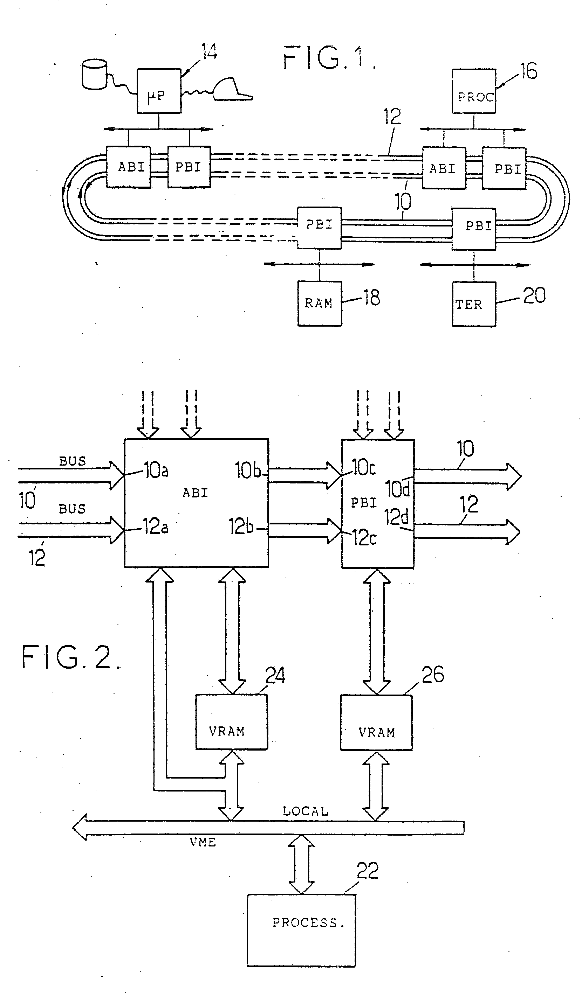

Les abonnés reliés aux bus 10 et 12 sur la Figure 1 peuvent être répartis en abonnés actifs et abonnés passifs. Les abonnés actifs représentés comprennent un microprocesseur maître 14 et un processeur de signal 16. Les abonnés passifs représentés comprennent une mémoire 18 et une logique spécialisée dans une opération particulière de traitement du signal 20 (transformée de Fourier rapide par exemple). Ils peuvent également comporter des périphériques d'entrée-sortie. Sur chaque bus en anneau, chaque coup d'horloge provoque le déplacement d'une case d'un abonné au suivant. Si un abonné veut envoyer un message à un autre, il doit attendre le passage d'une case vide affectée à l'abonné récepteur et y déposer son message.

Les différents abonnés sont reliés aux bus en anneau par deux types d'interfaces. Les abonnés actifs doivent être reliés au bus par un interface actif (ABI) permettant à l'abonné d'émettre des ordres de lecture ou d'écriture. Les abonnés passifs doivent être munis d'un interface passif permettant à l'abonné de recevoir des ordres, et de retourner une réponse en cas d'ordre de lecture. Mais, dans la pratique, les abonnés actifs seront en général munis à la fois d'un interface actif (ABI) et d'un interface passif (PBI) permettant d'accéder à leur mémoire sans intervention de l'organe actif.

L'organisation de chaque abonné actif du type processeur sera généralement du genre montré en Figure 2. Cette organisation comprend un bus interne compatible VME, indépendant du bus des autres abonnés. Les cartes portant les interfaces ABI et PBI contiendront des mémoires à double accès, l'une réservée au bus interne, l'autre aux bus en anneau 10 et 12. Ainsi, vu du processeur 22, un interface ABI ou PBI apparaît simplement comme un espace mémoire sur le bus interne VME du processeur. Cette constitution permet aux abonnés actifs aussi bien d'envoyer des messages ou des requêtes que de répondre à d'autres abonnés. A chaque interface ABI ou PBI est associée une mémoire vive 24 ou 26 accessible aussi bien à partir du bus 10 ou 12 (par l'intermédiaire de l'interface) qu'à partir du processeur 22. On peut en conséquence qualifier les mémoires vives de mémoires vives visibles ou VRAM, permettant d'écarter la nécessité de mémoires tampons supplémentaires.

On décrira maintenant le protocole mis en œuvre par le procédé suivant l'invention dans son application à un dispositif du genre montré en Figures 1 et 2, comportant, pour chaque abonné actif, un interface actif et un interface passif.

Il est tout d'abord nécessaire de résumer la fonction de ces interfaces.

L'interface actif ABI est responsable de l'organisation des transferts d'informations sur les bus. Son fonctionnement est commandé soit directement par le processeur associé, soit par des blocs de commande résidant dans la mémoire vive visible ou VRAM. Ses fonctions principales sont :

— sélection d'un des deux bus en anneau (dans la mesure où deux bus en anneau sont prévus) et des cases d'envoi des données,

— génération d'adresses,

— mise en œuvre du protocole de communication sur le bus en anneau (un ABI étant seul capable d'occuper une case, cette case pouvant être libérée dans tous les cas par un ABI, pour certains ordres par un PBI).

L'interface passif ou PBI assure le traitement des requêtes de lecture ou d'écriture émises par un ABI. Un certain nombre des cases du bus sont allouées à chaque PBI, suivant des critères qui peuvent être très variés et dont un sera donné plus loin à titre d'exemple. Chaque PBI est prévu pour n'examiner que les requêtes de transfert transmises sur les cases qui lui sont affectées. De plus, chaque PBI est affecté d'une adresse et il ne traite que les cases dont il a identifié l'adresse comme étant la sienne. Chaque PBI contient des fanions, par exemple au nombre de huit, dont le rôle apparaîtra plus loin, pouvant être utilisés comme sémaphores d'usage général, comme requêtes d'interruption, commandes de coupure, etc.

On a représenté en tirets sur la Figure 2, en plus des liaisons normales 10a-10d et 12a-12d entre les interfaces et les bus, des accès redondants dont le rôle apparaîtra plus loin pour permettre la reconfiguration des bus 10 et 12 en cas de défaillance d'un abonné.

On supposera maintenant que chaque bus en anneau a les caractéristiques suivantes :

— durée de cycle d'horloge : a = 50 ns,

— durée d'une case : quatre cycles d'horloges, soit 4a = 200 ns,

— nombre de fils : six fils d'adresse, quatre fils de données, deux fils d'état et un fil de synchronisation (reliés à une horloge non représentée).

L'organisation et l'imbrication des cases sont celles montrées en Fdigures 3 et 4.

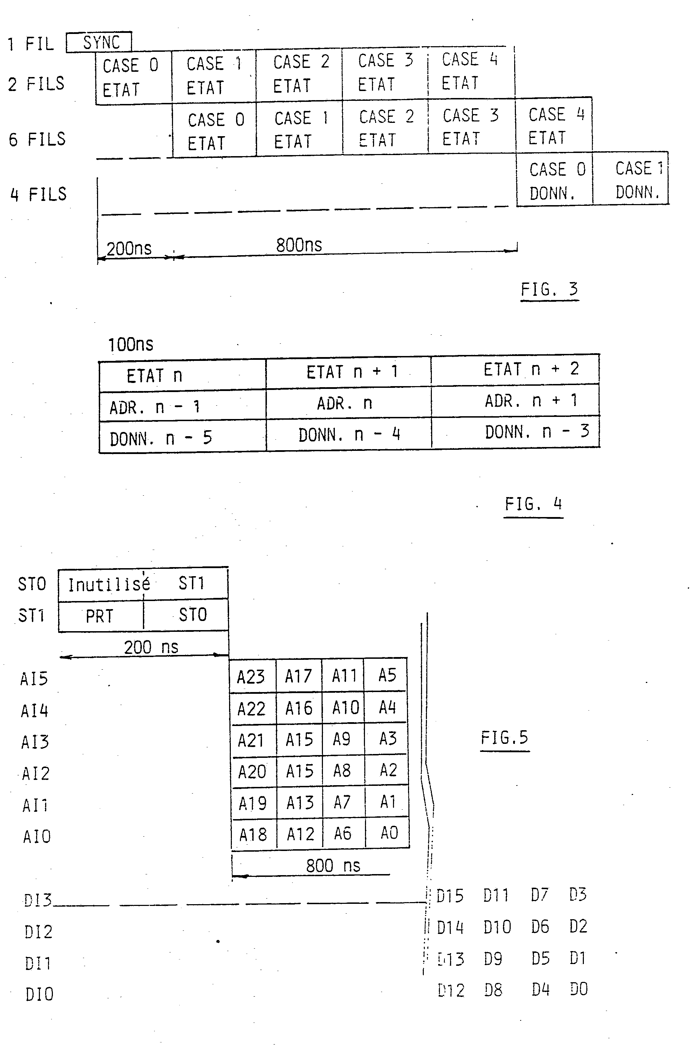

On voit que chaque case comprend trois parties, affectées respectivement à l'état, à l'adresse et aux données, chacune d'une durée 4a. La partie « état » comporte quatre bits qui apparaissent, deux bits à la fois, sur deux fils. Le temps de cycle d'horloge pour l'état est donc de 2a. La partie « adresse » comporte vingt-quatre bits, émis avec multiplexage temporel sur six fils. On voit que quatre cycles d'horloge sont nécessaires pour le décalage complet d'une adresse avec une durée de cycle d'horloge de 50 ns. Le mot de données comporte seize bits, encore multiplexés temporairement et apparaissant sur quatre fils. Il faut encore quatre cycles d'horloge pour décaler totalement le mot de données. Enfin, l'état « case 0 » est indiqué par un signal de synchronisation. Les cases suivantes sont numérotées 1, 2, 3, ... On voit que, du fait de l'imbrication des différentes parties d'une même case, comme indiqué en Figure 4, chaque case n'occupe en fait qu'une durée 4a.

La répartition des bits PRT (priorité), ST1 et ST0 d'état, A23 à A0 d'adresse, D15 à D0 de données) peut être celle donnée en Figure 5, avec la répartition entre les fils d'état STI1 et STI0, d'adresse AI5 à AI0, de données DI3 à DI0. Un des bits affectés à l'état n'est pas utilisé.

On constate qu'un abonné ne reçoit pas simultanément l'état, l'adresse et les données, ce qui permet, comme on le verra mieux plus loin, d'optimiser le fonctionnement. En effet, lorsqu'un PBI détecte la présence d'un ordre dans une des cases qui lui sont affectées, il peut préparer ses registres internes et sa logique de commande en vue de décoder l'adresse et de déterminer si l'ordre lui est destiné, auquel cas il peut immédiatement exécuter l'ordre.

On donnera maintenant une description du protocole suffisante pour bien comprendre comment s'effectue la transmission des données sur le bus.

Contenu des différentes parties d'une case

La partie « état » indique l'opération à effectuer sur le mot de données de la case.

L'état « libre », identifié par ST1 = 0, ST0 = 0, indique que la case est libre et peut être utilisée par tout abonné actif pour toute opération à effectuer sur un abonné passif auquel est affectée la case. L'état « lire », identifié par ST1 = 0, ST0 = 1, indique que la case transporte l'adresse d'un abonné passif particulier en vue d'effectuer une opération de lecture à cette adresse avec transfert des données correspondantes dans la case. L'état « écrire », identifié par ST1 = 1, ST0 = 0, indique que la case transporte une adresse et un mot de données : le mot de données doit s'inscrire dans la mémoire de l'abonné passif dont l'adresse est donnée par la case. L'état « écrire dans le plus proche voisin », identifié par ST1 = 1, ST0 = 1, indique que la case transporte une adresse et un mot de données. L'opération est la même que celle effectuée dans le cas de « écrire », mais la case est immédiatement libérée par l'abonné passif, l'état passant de « écrire dans le plus proche voisin » à « libre ».

Le fanion PRT (priorité) permet à un abonné actif de se réserver une case. Lorsque le fanion est levé, il interdit à tout ABI, sauf celui qui a levé le fanion, de prendre la case.

La partie adresse indique, de façon classique, où doit être effectuée l'opération de lecture ou d'écriture désirée.

Le mot de données peut être soit le mot lu dans la mémoire d'un abonné passif, soit un mot à écrire dans la mémoire d'un abonné passif.

Allocation des cases

A chaque abonné passif est alloué un jeu de cases sur l'anneau. En conséquence, chaque abonné n'aura à examiner que les requêtes de transfert transmises par ces cases. Inversement, un abonné actif ne pourra atteindre un abonné passif particulier qu'en choisissant une case allouée à cet abonné passif. Etant donné que plusieurs abonnés passifs partagent les mêmes cases, l'abonné passif devra décoder l'adresse pour déterminer si le contenu de la case lui est destiné.

Plusieurs modes d'allocation peuvent être envisagés suivant, en particulier, le nombre de bus et le type de tâche à accomplir. On décrira plus loin, sous la rubrique « Schéma d'accès aux cases du bus en anneau », une solution suivant l'invention, particulièrement avantageuse. Mais, auparavant, on décrira la séquence des opérations susceptibles d'intervenir en réponse aux ordres transférés par la partie « état » des cases.

Ecriture

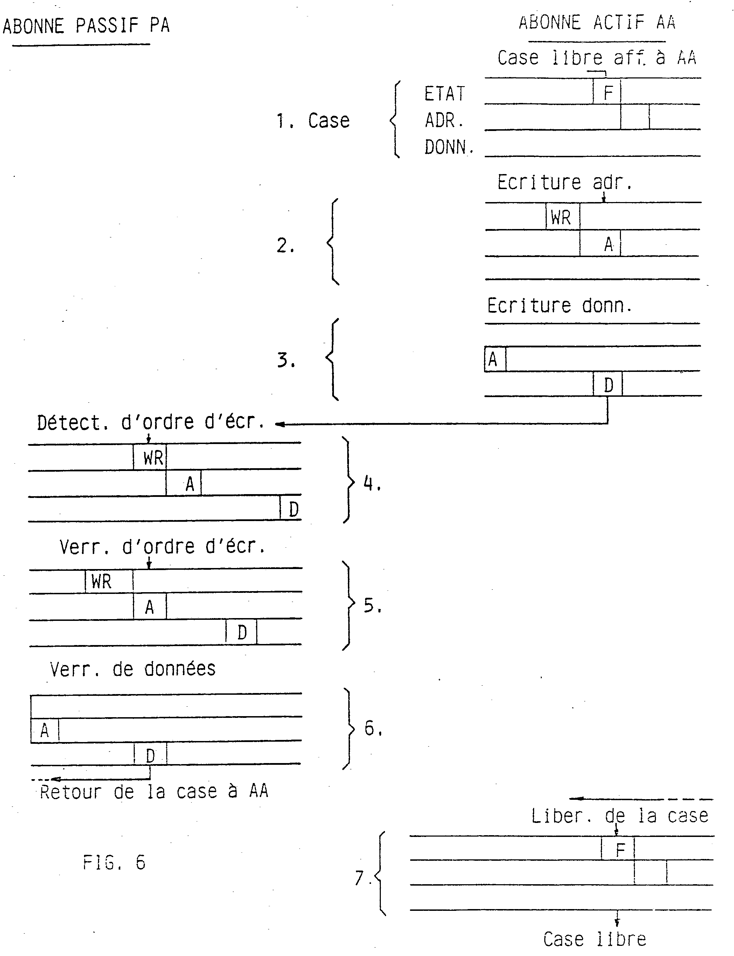

La Figure 6 montre la séquence des opérations lors d'une écriture commandée par un abonné actif AA souhaitant transférer un mot de données dans la mémoire d'un abonné passif particulier PA. La partie gauche de la Figure 6 montre les opérations qui interviennent au niveau de l'abonné passif, la partie droite celles qui interviennent au niveau de l'abonné actif. Le déroulement des opérations est indiqué du haut vers le bas.

L'abonné actif AA doit tout d'abord trouver une case allouée à PA et dont la partie « état » porte l'indication F (libre). C'est l'opération 1.

L'abonné actif change alors l'état de F (libre) à WR (écrire) puis charge l'adresse A et le mot de données D au passage (opérations 1, 2 et 3).

La case se déplace ensuite progressivement, d'un cran à chaque coup d'horloge, jusqu'au moment où sa partie « état » atteint l'abonné passif PA auquel le contenu de la case est destiné. L'interface PBI de l'abonné PA, qui vérifie le contenu de la partie « état » de chaque case qui lui est affectée, détecte l'ordre WR. Il prépare alors ses registres internes et ses registres de commande pour traiter un ordre d'écriture. Le délai qui s'écoule entre la partie « état » et la partie « adresse » permet à l'abonné PA de préparer sa logique (opération 4). L'adresse est ensuite chargée dans une mémoire de verrouillage (réseau de bascules). Le PBI de l'abonné PA décode l'adresse. S'il constate une identité avec son adresse, il transfère les données dans sa mémoire de verrouillage lors de l'apparition de la partie « données » (opération 6) et effectue l'opération d'écriture. La case continue à circuler et revient à l'abonné actif AA qui la libère en changeant le mot d'état de WR en F. Cette opération implique évidemment que l'abonné actif AA ait mémorisé toutes les cases qu'il a modifiées, de façon à pouvoir ultérieurement les libérer.

L'opération « écrire dans le plus proche voisin » est très similaire à la précédente, si ce n'est que cette fois F est changé en WNN (écrire dans le plus proche voisin) et que c'est le PBI de l'abonné destinataire PA qui libère immédiatement la case en changeant sa partie état de WNN en F. On peut ainsi utiliser la case plus d'une fois par rotation sur le bus. En contrepartie, cette opération présente une contrainte : un abonné actif AA ne peut exécuter une opération WNN que sur celui des abonnés passifs parmi ceux auxquels est affectée la case qui est la plus proche sur le bus, en aval de l'abonné actif AA.

Lecture

L'opération de lecture s'effectue de façon similaire à l'opération d'écriture : l'abonné actif AA provoque une opération d'écriture en trouvant une case affectée à l'abonné passif PA destinataire qui est libre, en changeant l'état en RD (lire) et en chargeant dans la case l'adresse où doit se faire la lecture. L'abonné passif destinataire PA détecte qu'une case qui lui est affectée transporte un ordre RD. Il positionne sa logique interne pour une opération de lecture. Lorsqu'il reçoit l'adresse, il la décode et effectue une opération de lecture dans sa mémoire. Lorsque la partie données de la case atteint PA, les données lues sont prêtes et peuvent être chargées dans la case, mais uniquement si le décodage de l'adresse a montré qu'il s'agit de celle de l'abonné passif.

S'il y a eu chargement dans la partie données, lors du retour à l'abonné actif AA qui a émis l'ordre, cet abonné AA libère la case en changeant son état de R à F et récupère le mot de données lorsqu'il l'atteint.

Comme on l'a déjà indiqué plus haut, il faut que l'intervalle de temps qui s'écoule entre deux cases consécutives allouées au même abonné passif soit suffisant pour éviter un chevauchement de deux cycles d'accès en mémoire. Cela implique, avec un temps d'accès en mémoire de $6a = 300$ ns, que le décalage entre les débuts de deux cases consécutives soit d'au moins 400 ns.

Transitions

Deux cas présentent une situation particulière. Il s'agit des transitions de lecture à écriture et d'écriture à lecture.

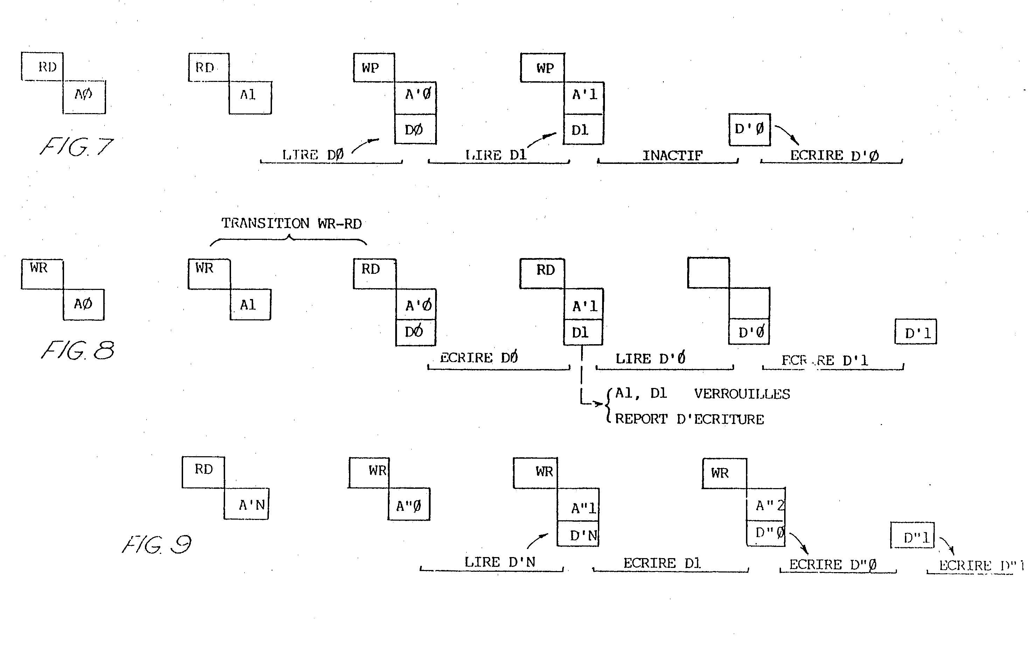

La figure 7 montre une transition de lecture à écriture au niveau d'un abonné passif particulier. Dans la situation montrée sur la Figure 7, l'abonné reçoit, après deux ordres de lecture, respective-

ment de données A0 et A1, un ordre d'écriture d'un mot de données D'0. Etant donné qu'une écriture ne peut être effectuée qu'une fois les données reçues, la mémoire vive de l'abonné passif sera oisive pendant la durée d'un cycle de lecture ou d'écriture, c'est-à-dire 400 ns.

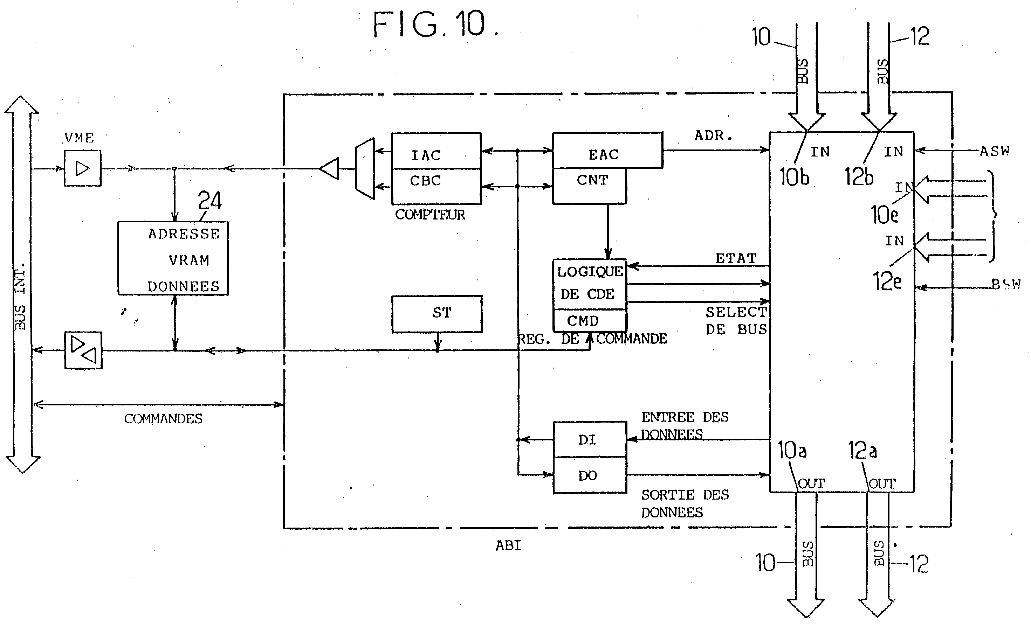

Lorsque, par contre, un ordre de lecture succède à un ordre d'écriture (Figure 8), un conflit d'accès se produit : la mémoire vive visible 26 (Figure 2) de l'abonné passif destinataire reçoit en même temps un ordre d'écriture du mot de données D1 et de lecture à l'adresse A0. L'opération de lecture doit avoir priorité sur l'opération d'écriture, puisqu'on attend un mot de données de l'abonné passif. En conséquence, le protocole prévoit une mise en suspens de l'opération d'écriture, l'adresse d'écriture et le mot de données étant conservés dans une mémoire de verrouillage (réseau de bascules) de l'interface de l'abonné passif.

L'opération d'écriture retardée peut être effectuée dans l'une ou l'autre de deux situations. La première est celle où une case traversant l'interface de l'abonné passif est libre : la mémoire n'est alors pas sollicitée au cours du cycle et l'opération d'écriture peut être effectuée. La seconde situation est celle où intervient une transition de lecture à écriture. La Figure 9 montre que, dans ce cas, l'opération d'écriture reportée peut être effectué pendant un cycle de la mémoire vive inoccupé.

Il faut remarquer au passage que cette possibilité garantit qu'il n'y aura jamais report de plus d'une opération d'écriture. S'il y a lecture d'un emplacement en mémoire avant que le mot de données ne soit inscrit à cet emplacement, la mémoire vive est inhibée et le mot de données retardé est transmis au lieu du mot de données de la mémoire. La complication est très faible, puisqu'il n'y a jamais plus d'un mot de données à conserver dans un registre formant antemémoire ou « cache ».

Réservation

Le rôle du bit de priorité est de permettre la transmission d'un message important par un abonné actif, alors qu'un autre abonné actif placé en amont accapare les cases. En mettant à 1 le bit de priorité d'une case occupée au passage, l'ABI d'un abonné actif AA interdit à tout autre abonné actif de se saisir de la case qui reviendra donc libre à l'abonné actif.

Schéma d'accès aux cases du bus en anneau

La description donnée jusqu'ici du protocole n'implique pas la présence de deux bus en anneau. On considèrera maintenant le cas particulièrement avantageux, montré en Figures 1 et 2, d'un dispositif à deux bus en anneau permettant une reconfiguration soit pour casser le bus en plusieurs sous-bus, soit pour pallier les conséquences d'une défaillance. Chaque bus peut être considéré comme le siège d'un nombre déterminé de cases, fixé par le nombre des abonnés connectés au bus. L'ensemble de ces cases constitue une tracé dont le début est fixé par un signal de synchronisation, la première case étant numérotée 0 et ainsi de suite (Figure 3). Chaque ABI voit ainsi deux trames, dont les longueurs peuvent être différentes et pour lesquelles il n'y a pas de synchronisme en ce qui concerne la première case. Chaque trame, constituée de cases 0, 1, ... $2n - 1$, est divisée en un canal pair, comprenant les cases d'ordre pair, et un canal impair. A chaque PBI est alloué un canal de la trame (canal pair ou canal impair) et seuls les ordres transmis par ce canal sont pris en considération par le PBI qui n'a donc à considérer qu'une case sur deux. Avec un temps de cycle de case de 200 ns, deux ordres adressés au même PBI sont séparés par au moins 400 ns, ce qui laisse le temps au PBI de traiter les ordres. Ainsi, à chaque PBI est affectée la moitié des cases et chaque PBI partage ces cases avec d'autres, ce qui rend nécessaire la présence d'une adresse, à vingt-quatre bits dans le mode d'exécution qui a été décrit ci-dessus.

De son côté, chaque ABI a accès aux deux bus 10 et 12. En conséquence, avant d'envoyer un ordre de transfert, l'ABI doit choisir le bus sur lequel il l'effectuera, et le canal sur le bus. La sélection du PBI concerné est faite automatiquement par l'adresse. Une fois le bus et le canal choisis, l'ABI peut transférer un mot de données pendant une case sur deux.

Le bus devant avoir un nombre pair de cases et étant donné qu'une case représente deux interfaces, le nombre de dispositifs sur un bus en anneau doit être multiple de quatre, ces dispositifs pouvant être des ABI, des PBI ou des interfaces mortes (registres insérés sur le bus en anneau pour permettre d'arriver à un nombre multiple de quatre qui doit être d'au moins huit). Ces deux conditions satisfaites, les éléments du bus s'adaptent à un nombre quelconque d'abonnés.

Constitution des interfaces actifs

La Figure 10 montre une architecture interne qu'il est possible d'adopter pour un ABI destiné à coupler deux bus en anneau 10 et 12 avec un bus interne VME. A ce bus interne sont reliés non seulement l'ABI, mais aussi le processeur et, dans la plupart des cas, un PBI.

L'interface entre l'ABI et le bus interne comporte une mémoire vive visible ou VRAM 24 destinée à stocker les blocs de données à transférer.

L'ABI peut être regardé comme comprenant deux parties principales, une logique de commande et ses registres associés d'une part, des coupleurs de bus d'autre part.

La logique de commande et ses registres associés comportent :

— un registre d'état ST. Ce registre constitue une mémoire de lecture, par exemple à seize bits, pour pouvoir contenir huit fanions de test et de positionnement, pouvant être abaissés par un ordre donné à l'ABI, ainsi que des bits d'état indiquant l'état interne de l'ABI (occupé ou non, ...) ;

— un compteur de blocs de commande CBC. Ce compteur, pouvant avoir seize bits, constitue un pointeur indiquant la zone de la mémoire 24 à partir de laquelle on doit récupérer les ordres lorsque l'ABI est en mode de commande par bloc. Le compteur CBC s'incrémente · après chaque accès à un bloc de commande. Il peut être initialisé à une valeur déterminée par une commande de saut « JUMP ». Le compteur CBC est remis à zéro lors du rétablissement de l'interface ABI ;

— un compteur d'adresses internes IAC. Le compteur IAC pointe l'adresse du tampon de données dans la mémoire visible VRAM. Les transferts sont effectués à partir de ce tampon ou vers ce tampon. Le compteur IAC reçoit un paramètre de commande de transfert et s'incrémente après chaque accès au tampon de données par l'ABI ;

— un compteur d'adresses externes EAC, pouvant comporter vingt-quatre bits dans le cas envisagé plus haut. Ce compteur donne l'adresse du transfert sur le bus en anneau. Cette adresse est décodée par les interfaces passifs de bus PBI reliés aux bus en anneau. On charge un paramètre de commande de transfert dans le compteur EAC.

Un autre paramètre E donne l'incrément : après chaque transfert avec le bus en anneau, l'information suivante est effectuée :

$$EAC \rightarrow EAC + 2^E$$

En d'autres termes, le compteur EAC est incrémenté de $2^E$.

— un registre de comptage CNT, pouvant avoir douze bits. Ce registre mémorise le nombre de transferts à exécuter par l'ABI.

L'unité logique de commande CLU, de son côté, interprète l'ordre mémorisé dans le registre CMD et organise le séquencement des opérations.

Les deux interfaces de bus en anneau permettent de relier l'ABI aux bus 10 et 12. L'ABI ne peut cependant transférer des données qu'avec un seul bus à la fois. La Figure 10 montre encore deux entrées redondantes 10e et 12e qui permettent la reconfiguration, comme on le verra plus loin. La sélection entre les entrées est réalisée à l'aide de commandes appliquées aux coupleurs sur deux entrées supplémentaires, monofil. Ces entrées ASW et BSW permettent respectivement de choisir entre les entrées 10b et 10e, 12b et 12e.

Il n'est pas nécessaire de décrire ici la constitution détaillée de chacun des circuits qui constituent l'ABI, car ils peuvent être relativement classiques. De même, il n'est pas nécessaire de donner le détail de la constitution des PBI, qui se rapproche de la constitution précédente.

Avant de décrire les dispositions suivant l'invention qui permettent de réduire la complexité requise pour reconfigurer le bus, il peut être utile de rappeler les solutions classiques de reconfiguration sur un dispositif multiprocesseur à bus en anneau.

Une première solution consiste à prévoir deux bus, dont l'un est en attente. Ce bus en attente est constitué de tronçons contournant chacun l'un des abonnés. lorsqu'un des abonnés est défaillant, la mise en service de ce tronçon permet de le court-circuiter en effectuant la reconfiguration par logiciel. Cette solution a l'inconvénient de ne pas permettre d'isoler complètement un abonné défaillant du système.

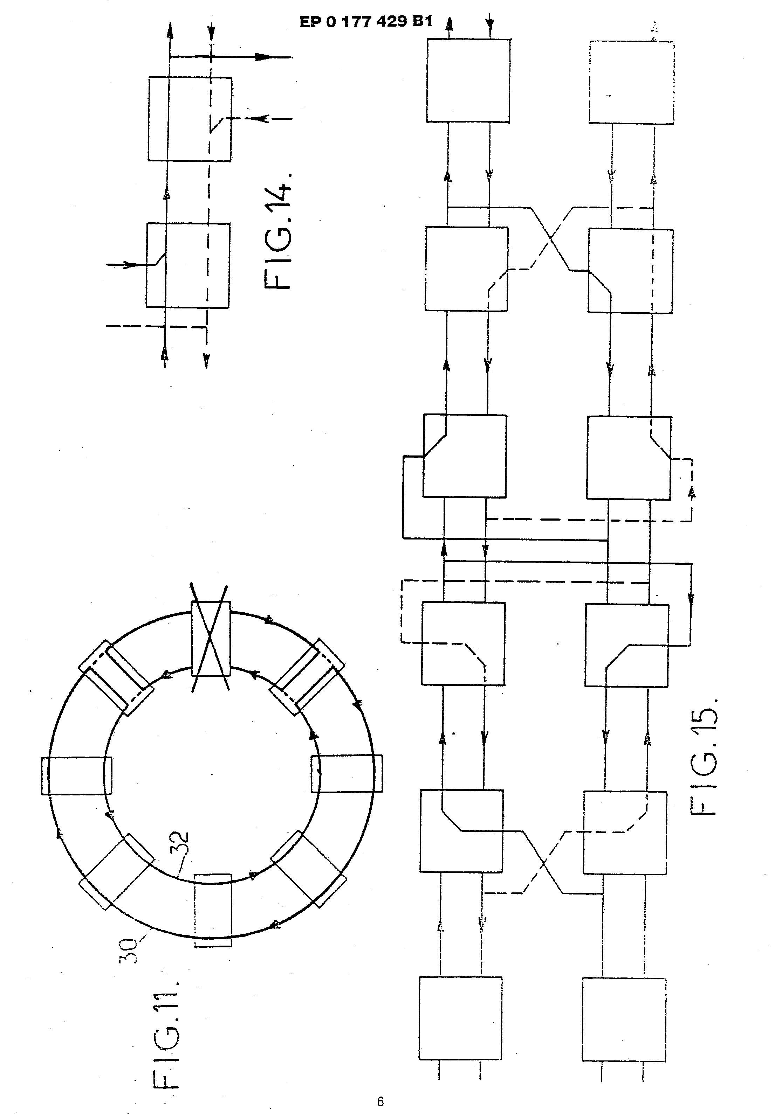

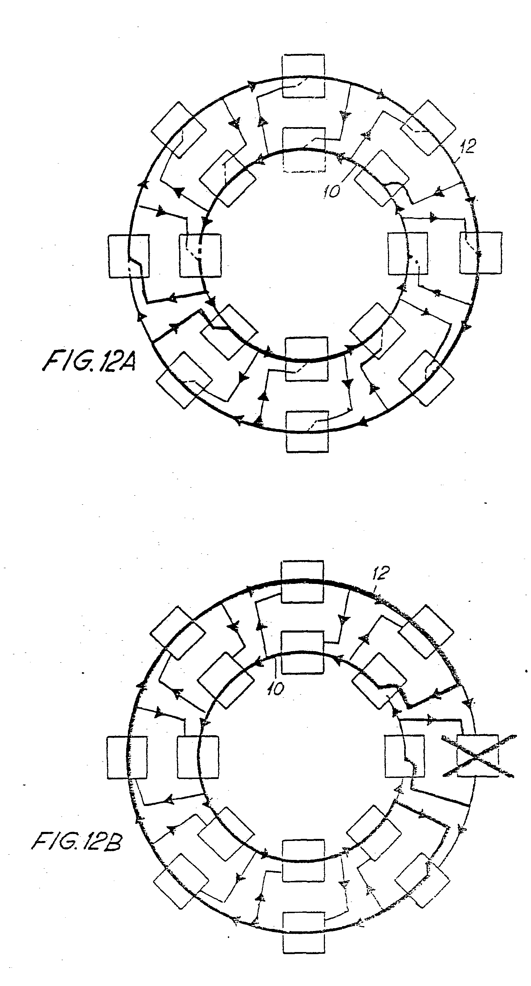

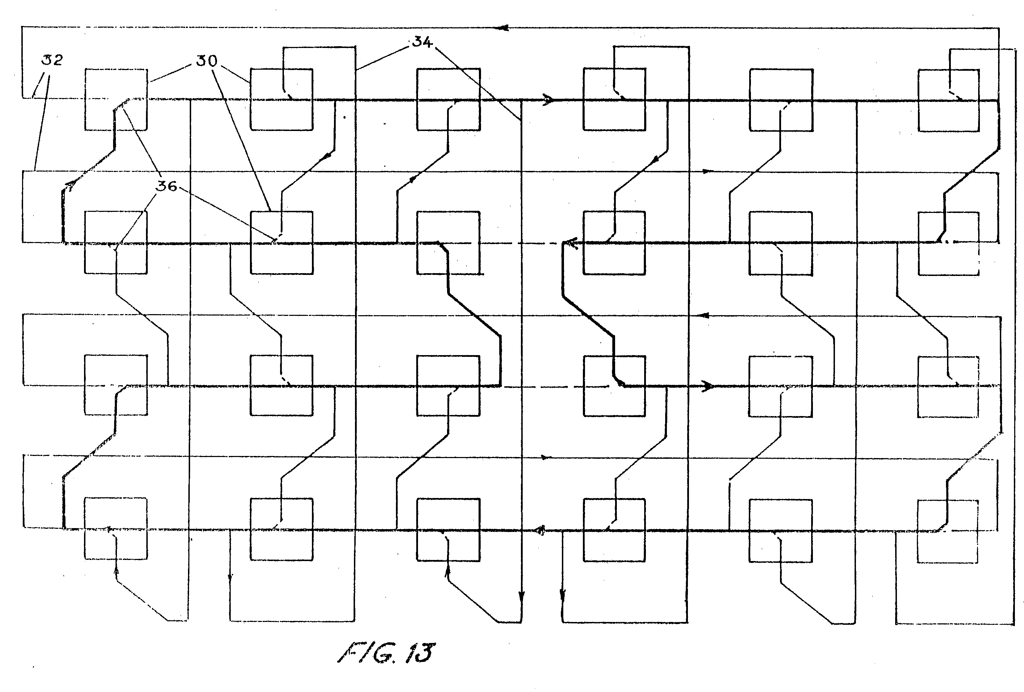

Une seconde solution, montrée en Figure 11, consiste à prévoir une structure en double anneau prévu pour des circulations de sens contraires 30, 32. On peut alors recréer une configuration en anneau (indiquée en traits épais) quel que soit l'abonné défectueux (celui de droite sur la Figure 11). Elle a l'inconvénient d'exiger de doubler le nombre des liaisons d'entrée et de sortie (deux entrées et deux sorties au lieu d'une entrée et d'une sortie dans une configuration non fiabilisée).

L'invention permet de réduire considérablement la complexité requise pour fiabiliser le bus et autoriser une reconfiguration à la demande. Une première solution suivant l'invention, schématisée en Figures 12A et 12B permet d'effectuer l'économie d'une sortie par fil de bus, au prix de la nécessité de devoir mettre hors service deux interfaces lorsqu'un seul est défaillant. Mais, dans la pratique, ces deux interfaces peuvent être l'ABI et le PBI d'un même abonné actif, de sorte que l'exclusion de deux interfaces n'a pas d'effet plus grave que celui d'un seul. La Figure 12A montre la configuration normale comportant deux boucles sur lesquelles la circulation s'effectue en sens inverse. Chaque interface comporte un organe d'aiguillage commandé par logiciel et permettant de passer des liaisons montrées en traits pleins aux liaisons montrées en tirets. Les deux boucles sont reliées au niveau de n'importe quel couple (couple de gauche sur la Figure 12A) pour constituer un bus unique. La Figure 12B montre le bus reconfiguré après exclusion de l'interface défectueux (à droite sur la Figure) et de celui qui lui est couplé.

Grâce à la disposition qui vient d'être décrite, il est possible de diminuer notablement le nombre des pattes requises du coupleur de bus des ABI et PBI. Il suffit en effet de disposer de deux entrées et d'une sortie sur chaque coupleur.

La configuration simple montrée en Figure 12A peut être généralisée à deux dimensions ou même davantage. Le montage dont une fraction est montrée en Figure 13 peut être regardé comme associant quatre interfaces au lieu de deux. En fonctionnement normal, le montage en série des boucles pour constituer un bus unique est indiqué en traits renforcés. En cas de panne d'un interface, le bus peut toujours ·être reconfiguré en mettant hors circuit un groupe de quatre interfaces.

Ce montage permet de tolérer la panne de plusieurs interfaces. Pour cela, les interfaces 30 sont associés par des bus élémentaires tels que 32 dans une direction, 34 dans l'autre. Un commutateur 36 prévu dans chaque interface 30 permet de reconfigurer le système. Lorsque par exemple les commutateurs 36 ont les dispositions montrées en Figure 13, l'ensemble des bus élémentaires 32 et une fraction de deux bus élémentaires 34 interviennent pour reconfigurer un bus unique. Toute panne d'un interface permet, par commande de certains commutateurs par voie logicielle, de reconfigurer le bus, éventuellement en le fractionnant en plusieurs bus. La présence de bus élémentaires dans deux directions croisées permet d'assurer cette reconfiguration même après panne de plusieurs interfaces.

Une généralisation aboutissant à une réduction encore plus importante du nombre de fils peut être obtenue lorsque deux couples de deux bus parcourent les interfaces.

Le nombre de pattes de liaison est en principe égal à six (deux entrées, deux sorties et deux entrées d'aiguillage). Mais il est possible de mettre l'entrée de secours en commun, ce qui permet de réduire le nombre dans le rapport 5/6.

La Figure 14 montre comment deux interfaces ayant chacun deux entrées, deux sorties et une entrée de secours peuvent être montés de manière à recréer un double interface à deux entrées, deux sorties et deux entrées de secours. En substituant ce double interface aux interfaces simples des Figures 12A et 13, on crée des systèmes de doubles bus, chacun de ces deux bus ayant les propriétés mentionnées pour le bus sans substitution.

La Figure 15 montre, à titre d'exemple, le résultat obtenu en appliquant la constitution de la Figure 14 au montage de la Figure 12A. Il serait possible de faire la même application à d'autres architectures, par exemple à celle de la Figure 13.

## Revendications

1. Procédé d'échange d'informations entre abonnés par bus en anneau, par cases circulant sur le bus (10, 12), chaque case contenant une indication d'état, une adresse et/ou un mot de données, suivant un protocole de transfert décentralisé et passif à affectation statique de case aux abonnés munis d'un interface passif de bus, caractérisé en ce que la case comprend au moins trois parties successives de durée commune, affectées respectivement à l'indication d'état, à l'adresse et au mot de données et en ce que la partie affectée au mot de données est séparée temporellement de la partie affectée à l'adresse par un délai égal à un multiple de ladite durée commune et suffisant pour permettre à chaque interface passif de bus (PBI) concerné par la case de décoder l'adresse avant l'arrivée du mot de données correspondant.

2. Procédé selon la revendication 1, caractérisé en ce que les cases sont réparties en $2^n$ groupes, chaque groupe étant affecté à un groupe d'interfaces passifs.

3. Procédé selon l'une quelconque des revendications précédentes, caractérisé en ce qu'une opération d'écriture dans un abonné passif (PA) sur ordre d'un abonné actif (AA) comprend les étapes de repérage d'une case affectée à l'abonné passif et libre par l'interface actif de bus (ABI) de l'abonné actif (AA), le changement par ledit interface actif de la partie « état » de l'état libre (F) à l'état écriture (WR), l'indication de l'adresse de l'interface passif (PBI) de l'abonné passif (PA) et l'inscription du mot de données à transmettre, la détection par l'abonné passif destinataire de la présence d'un ordre d'écriture (WR) dans une case qui lui est affectée, le décodage de l'adresse et l'opération d'écriture lorsque l'adresse d'écriture a été identifiée, puis le retour de la case à l'abonné actif (AA) qui a mémorisé l'ordre d'écriture et libère la case en changeant la partie état de (WR) en (F).

4. Procédé selon la revendication 3, caractérisé en ce que, en cas de transition ordre d'écriture-ordre de lecture à la même adresse, l'opération d'écriture en mémoire de l'abonné passif (PA) destinataire est retardée jusqu'à apparition d'une case libre libérant un cycle d'accès en mémoire, ou d'une transition écriture-lecture et, en cas d'ordre de lecture avant que l'écriture soit effective, la mémoire de l'abonné passif est inhibée et le mot de données retardé est retransmis, cette opération pouvant être effectuée à l'aide d'un registre formant ante-mémoire.

5. Procédé selon l'une quelconque des revendications précédentes, caractérisé en ce que la partie état est prévue pour recevoir un ordre d'écriture dans celui des abonnés passifs, parmi ceux auxquels est affectée la case, qui est le plus proche en aval de l'abonné actif émettant l'ordre, l'interface passif de bus (PPI) dudit abonné passif étant prévu pour libérer dans ce cas la case.

6. Dispositif multiprocesseur comprenant au moins un bus en anneau (10, 12), des abonnés passifs dont chacun est relié au bus par un interface passif de bus (PBI) permettant à l'abonné de recevoir un ordre de transfert, des abonnés actifs (AA) dont chacun est relié au bus par un interface actif (ABI) permettant de provoquer un transfert d'informations entre cet abonné actif et un autre abonné et par un interface passif (PBI), et une horloge permettant de faire circuler sur le bus des cases d'informations d'un abonné au suivant à chaque coup d'horloge, caractérisé en ce que chacun desdits interfaces actifs est prévu pour constituer chaque case d'informations en au moins trois parties de durée commune, affectées respectivement à l'indication d'état, à l'adresse et au mot de données, la partie affectée au mot de données étant séparée temporellement de la partie affectée à l'adresse par un délai égal à un multiple de ladite durée commune et suffisant pour permettre à chaque interface passif de bus (PBI) concerné par la case de décoder l'adresse avant l'arrivée du mot de données correspondant.

7. Dispositif selon la revendication 6, caractérisé en ce qu'il comprend deux bus en anneau prévus pour des circulations de sens opposés (10, 12).

8. Dispositif selon la revendication 6 ou 7, caractérisé en ce que chaque interface actif (ABI) comporte une mémoire organisée en registre à décalage, où la circulation s'effectue à la même cadence que sur le bus correspondant.

9. Dispositif multiprocesseur selon la revendication 7, caractérisé en ce que les interfaces (PBI, ABI) sont regroupés par couples, les deux interfaces de chaque couple étant reliés aux bus (10, 12) par un nombre de liaisons juste suffisant pour permettre de refermer les deux anneaux l'un sur l'autre pour reconstituer un bus en excluant le couple où se trouve un interface ou abonné défaillant.

10. Dispositif selon la revendication 9, caractérisé en ce que chaque interface comprend deux entrées et une seule sortie.

11. Dispositif selon la revendication 9 ou 10, caractérisé en ce que l'interface passif (PBI) et l'interface actif (ABI) d'un même abonné actif sont regroupés dans le même couple.

12. Dispositif selon la revendicationd 9, 10 ou 11, caractérisé en ce que les interfaces sont reliés par des boucles suivant une configuration à deux dimensions permettant de reconstituer le bus en excluant au plus quatre interfaces pour chaque interface défaillant.

13. Dispositif selon la revendication 9, 11 ou 12, caractérisé en ce qu'il comprend au moins deux bus en anneau à deux boucles, caractérisé en ce que chaque interface comprend trois entrées et deux sorties.

## Claims

1. Process of information exchange between subscribers through a ring bus by slots circulating on the bus (10, 12), each slot containing a status indication, an address and/or data work, according to a decentralized and passive transfer protocol with a static allocation of slot to the subscribers provided with a passive bus interface, characterized in that the slot comprises at least three successive portions having a common time duration, respectively dedicated to the status indication, to the address and to the data word and in that the portion dedicated to the data word is time separated from the portion dedicated to the address by a delay which is equal to a multiple of said common duration and which is sufficient for permitting address decoding by each passive bus interface (PBI) which is concerned by the slot before the respective data word is received.

2. Process according to claim 1, characterized in that the slots are distributed in $2^n$ groups, each group being dedicated to a group of passive interfaces.

3. Process according to any one of the preceding claims, characterized in that a write operation into a passive subscriber (PA) responsive to an instruction from an active subscriber (AA) comprises the steps of : finding a slot dedicated to the passive subscriber and which is free by the active bus interface (ABI) of the active subscriber (AA) ; changing the status portion from the free status « F » into the write status (WR) by said active interface ; indicating the address of the passive interface (PBI) of the dpassive subscriber (PA) aud putting the data word to be transmitted ; detecting the presence of a write instruction (WR) by the passive subscriber for which the word is intended in a slot which is dedicated to the passive subscriber ; preparing the internal registers by said subscriber ; address decoding and writing when the write address has been recognized ; then return of the slot to the active subscriber (AA) which stored the write instruction and frees the slot by changing the status portion from (WR) to (F).

4. Process according to claim 3, characterized in that, upon a write-to-read transition at the same address, writing into the memory of the receiving passive subscriber (PA) is delayed until a free slot appears which frees a memory access cycle or until there is a write-to-read transition and, upon a read instruction before writing has been completed, the memory of the passive subscriber is disabled and the delayed data word is transmitted again, such operation being possibly carried out with a register constituting a cache.

5. Process according to any one of the preceding claims, characterized in that the status portion is arranged for receiving an instruction of writing into that of the passive subscriber, among the passive subscribers to which the slot is dedicated, which is closer downstream of the active subscriber delivering the instruction, the passive bus interface (PPI) of said passive subscriber being arranged for freeing the slot in that case.

6. Multiprocessor device comprising at least one ring bus (10, 12), passive subscribers each of which is connected to the bus by a passive bus interface (PBI) which allows the subscriber to receive a transfer instruction, active subscribers (AA) each of which is connected to the bus by an active interface (ABI) making it possible to cause a data transfer between said active subscriber and another subscriber, and by a passive interface (PBI), and a clock for circulating data slots on thus bus from a subscriber to the next responsive to each clock pulse, characterized in that each of said active interfaces is arranged for constituting each data slot in at least three portions having a common duration, respectively dedicated to the status indication to the address and to the data word, the portion which is dedicated to the data word being time separated from the portion dedicated to the address by a duration equal to a multiple of said common duration and sufficient for permitting each bus passive interface (PBI) which is concerned by the slot to decode the address before arrival of the respective data word.

7. Device according to claim 6, characterized in that it comprises two ring buses arranged for circulations in opposed directions (10, 12).

8. Device according to claim 6 or 7, characterized in that each active interface (ABI) comprises a memory organized as a shift register, wherein circulation occurs at the same rate as on the respective bus.

9. Multiprocessor device according to claim 7, characterized in that the interfaces (PBI, ABI) are distributed into pairs, the two interfaces of each pair being connected to the buses (10, 12) by a number of connections which is just sufficient for making it possible to loop again the two rings upon each other for reconstituting a bus by excluding the pair where there is a failed interface or subscriber.

10. Device according to claim 9, characterized in that each interface comprises two inputs and a single output.

11. Device according to claim 9 or 10, characterized in that the passive interface (PBI) and the active interface (ABI) of a same active subscriber are affected to the same pair.

12. Device according to claim 9, 10 or 11, characterized in that the interfaces are connected by loops according to a two dimensional arrangement which makes it possible to reconstitute the bus by excluding at most four interfaces upon failure of an interface.

13. Device according claim 9, 11 or 12, characterized in that it comprises at least two ring buses having two loops and characterized in that each interface comprises three inputs and two outputs.

## Patentansprüche

1. Verfahren zum Informationsaustausch zwischen Teilnehmern mittels einer Busschleife und mittels auf dem Bus (10, 12) umlaufender Steckplätze, wobei jeder Steckplatz eine Lageanzeige, eine Adresse und/oder ein Datenwort enthält, einem dezentralisierten Übertragungsprotokoll folgt und zur statischen Bestimmung des Steckplatzes mit den Teilnehmern indirekt verbunden ist, welche mit einem passiven Interface des Busses versehen sind, dadurch gekennzeichnet, daß der Steckplatz wengistens drei aufeinanderfolgende Teile gemeinsamer Dauer aufweist, die jeweils von der Lageanzeige, der Adresse und dem Datenwort beaufschlagt werden, und daß das vom Datenwort beaufschlagte Teil zeitweise von dem von der Adresse beaufschlagten Teil durch eine Verspätung getrennt ist, die einem Mehrfachen der gemeinsamen Dauer entspricht und ausreicht, um jedem den Steckplatz betreffenden passiven Interface des Busses (PBI) zu erlauben, die Adresse vor Ankunft des entsprechenden Datenwortes zu dekodieren.

2. Verfahren nach Anspruch 1, dadurch gekennzeichnet, daß die Steckplätze in $2^n$ Gruppen verteilt sind, wobei jede Gruppe von einer Gruppe von passiven Interfaces beaufschlagt wird.

3. Verfahren nach Anspruch 1 oder 2, dadurch gekennzeichnet, daß eine Schreiboperation in einem passiven Teilnehmer (PA) auf Anordnung eines aktiven Teilnehmers (AA) folgende Schritte umfaßt: Ortsbestimmung eines Steckplatzes, der vom passiven Teilnehmer beaufschlagt wird und durch ein aktives Interface des Busses (ABI) des aktiven Teilnehmers (AA) frei ist, Wechsel des « Lage »-Teiles von der freien Lage (F) zu der Schreiblage (WR) durch das aktive Interface, Anzeige der Adresse des passiven Interfaces (PBI) des passiven Teilnehmers (PA) und Einschreiben des zu übertragenden Datenwortes, Bestimmung der Gegenwart einer Schreibreihenfolge (WR) in einem Steckplatz, in der sie bewirkt wird, mittels des passiven Empfangsteilnehmers, Vorbereitung von internen Registern durch diesen Teilnehmer, Dekodierung der Adresse und der Schreiboperation, bis die Schreibadresse identifiziert ist, dann Rückgabe des Steckplatzes an den aktiven Teilnehmer (AA), der die Schreibreihenfolge gespeichert hat, und Befreien des Steckplatzes durch Wechseln des Lageteils von (WR) nach (F).

4. Verfahren nach Anspruch 3, dadurch gekennzeichnet, daß im Falle eines Wechsels der Schreibreihenfolge zur Lesereihenfolge mit derselben Adresse die Schreiboperation im Speicher des passiven Empfangsteilnehmers (PA) verzögert wird, bis ein freier Steckplatz mit einer freien Zugangsphase im Speicher erscheint, oder bis ein Übergang vom Schreiben zum Lesen erfolgt, und daß im Falle, daß das Lesen vor dem Schreiben erfolgt, der Speicher des passiven Teilnehmers gehemmt wird und daß das verzögerte Datenwort zurückübertragen wird, wobei diese Operation mit Hilfe eines einen Vorspeicher bildenden Registers bewirkbar ist.

5. Verfahren nach Anspruch 1 oder einem der folgenden, dadurch gekennzeichnet, daß das Lageteil dazu vorgesehen ist, eine Schreibreihenfolge in den betreffenden passiven Teilnehmern zu erhalten, bei denen derjenige Steckplatz beaufschlagt wird, welcher am nächsten in Richtung des die Reihenfolge ausgebenden aktiven Teilnehmers angeordnet ist, wobei das passive Interface des Busses (PBI) des passiven Teilnehmers in diesem Fall zum Befreien des Steckplatzes vorgesehen ist.

6. Multiprozessorvorrichtung mit wenigstens einer Busschleife (10, 12), mit passiven Teilnehmern, von denen jeder mit dem Bus mittels eines passiven Interfaces des Busses (PBI) verbunden ist, welches dem Teilnehmer den Empfang einer Übertragungsreihenfolge erlaubt, mit aktiven Teilnehmern (AA), von denen jeder mit dem Bus mittels eines aktiven Interfaces (ABI) verbunden ist, welches das Hervorbringen einer Informationsübertragung zwischen diesem aktiven Teilnehmer und einem anderen Teilnehmer und durch ein passives Interface (PBI) erlaubt, und mit einer Uhr, die ein Umlaufen von Informationssteckplätzen auf dem Bus von einem Teilnehmer zum nächsten bei jedem Uhrschlag ermöglicht, dadurch gekennzeichnet, daß jedes der aktiven Interfaces vorgesehen ist, jeden Informationssteckplatz mit wenigstens drei Teilen gemeinsamer Zeitdauer auszubilden, welche jeweils von der Lageanzeigen, der Adresse und dem Datenwort beaufschlagt werden, wobei das von dem Datenwort beaufschlagte Teil zietweise vom von der Adresse beaufschlagten Teil durch eine Verzögerung getrennt wird, welche einem Mehrfachen der gemeinsamen Dauer entspricht und ausreicht, um jedem den Steckplatz betreffenden passiven Interface des Busses (PBI) zu erlauben, die Adresse vor Ankunft des entsprechenden Datenwortes zu dekodieren.

7. Vorrichtung nach Anspruch 6, gekennzeichnet durch zwei Busschleifen in jeweils umgekehrter Umlaufrichtung (10, 12).

8. Vorrichtung nach Anspruch 6 oder 7, dadurch gekennzeichnet, daß jedes aktive Interface (ABI) einen Speicher mit Verschieberegister aufweist, wo der Amlauf im selben Takt wie auf dem entsprechenden Bus erfolgt.

9. Vorrichtung nach Anspruch 7, dadurch gekennzeichnet, daß die Interfaces (PBI, ABI) paarweise angeordnet sind, wobei die zwei Interfaces jedes Paares mit dem Bus (10, 12) durch eine Anzahl von Verbindungen verbunden sind, die gerade ausreichen, um die zwei Schleifen eine nach der anderen wieder zu verschließen, um einen Bus durch Ausschließen des Paares wiederherzustellen, wo sich ein fehlerhaftes Interface oder ein fehlerhafter Teilnehmer befindet.

10. Vorrichtung nach Anspruch 9, dadurch gekennzeichnet, daß jedes Interface zwei Eingänge und einen einzigen Ausgang aufweist.

11. Vorrichtung nach Anspruch 9 oder 10, dadurch gekennzeichnet, daß das passive Interface (PBI) und das aktive Interface (ABI) eines selben aktiven Teilnehmers in dem selben Paar zusammengefaßt sind.

12. Vorrichtung nach Anspruch nach Anspruch 9, 10 oder 11, dadurch gekennzeichnet, daß die Interfaces mittels Schleifen in einer zweidimensionalen Anordnung verbunden sind, welche die Wiederherstellung des Busses durch Ausschließen von mehr als vier Interfaces für jede fehlerhafte Interface erlauben.

13. Vorrichtung nach Anspruch 9, 11 oder 12, dadurch gekennzeichnet, daß diese wengistens zwei Busschleifen mit zwei Schleifen aufweist und daß jedes Interface drei Eingaänge und zwei Ausgänge aufweist.

FIG.1.

FIG.2.

1 FIL | SYNC

| 2 FILS | CASE 0 ETAT | CASE 1 ETAT | CASE 2 ETAT | CASE 3 ETAT | CASE 4 ETAT | |
|---|---|---|---|---|---|---|
| 6 FILS | | CASE 0 ETAT | CASE 1 ETAT | CASE 2 ETAT | CASE 3 ETAT | CASE 4 ETAT |
| 4 FILS | | | | | | CASE 0 DONN. | CASE 1 DONN. |

|← 200ns →|←———— 800ns ————→|

FIG. 3

100ns

| ETAT n | ETAT n + 1 | ETAT n + 2 |
|---|---|---|
| ADR. n − 1 | ADR. n | ADR. n + 1 |
| DONN. n − 5 | DONN. n − 4 | DONN. n − 3 |

FIG. 4

| ST0 | Inutilisé | ST1 |
|---|---|---|
| ST1 | PRT | ST0 |

|←———— 200 ns ————→|

FIG.5

| | A23 | A17 | A11 | A5 |
|---|---|---|---|---|
| AI5 | A23 | A17 | A11 | A5 |
| AI4 | A22 | A16 | A10 | A4 |
| AI3 | A21 | A15 | A9 | A3 |
| AI2 | A20 | A15 | A8 | A2 |
| AI1 | A19 | A13 | A7 | A1 |
| AI0 | A18 | A12 | A6 | A0 |

|←———— 800 ns ————→|

| DI3 | D15 | D11 | D7 | D3 |
|---|---|---|---|---|
| DI2 | D14 | D10 | D6 | D2 |
| DI1 | D13 | D9 | D5 | D1 |
| DI0 | D12 | D8 | D4 | D0 |

## EP 0 177 429 B1

ABONNE PASSIF PA

ABONNE ACTIF AA

Case libre aff. à AA

1. Case { ETAT
ADR.
DONN.

F

Ecriture adr.

2. {

WR

A

Ecriture donn.

3. {

A

D

Détect. d'ordre d'écr.

WR

A

D

} 4.

Verr. d'ordre d'écr.

WR

A

D

} 5.

Verr. de données

A

D

} 6.

Retour de la case à AA

Liber. de la case

F

7. {

FIG. 6

Case libre

3

EP 0 177 429 B1

RD AØ

FIG.7

RD A1

WP A'Ø DØ
LIRE DØ

WP A'1 D1
LIRE D1

INACTIF

D'Ø
ECRIRE D'Ø

TRANSITION WR-RD

WR AØ

FIG.8

WR A1

RD A'Ø DØ
ECRIRE DØ

RD A'1 D1
LIRE D'Ø

D'Ø
ECRIRE D'1

D'1

A1, D1 VERROUILLES
REPORT D'ECRITURE

RD A'N

FIG.9

WR A"Ø

WR A"1 D'N
LIRE D'N

WR A"2 D"Ø
ECRIRE D1

ECRIRE D"Ø

D"1
ECRIRE D"1

# FIG.10.

EP 0 177 429 B1

FIG.11.

30

32

FIG.14.

FIG.15.

EP 0 177 429 B1

FIG.12A

FIG.12B

FIG. 13